# EUROPÄISCHE PATENTSCHRIFT

(11) **EP 2 433 532 B1**
(45) Veröffentlichungstag und Bekanntmachung des Hinweises auf die Patenterteilung: **23.04.2014**
(21) Anmeldenummer: 11180897.8
(22) Anmeldetag: 12.09.2011
(51) Int. Cl.: A47J 43/07, A47J 43/08, H01H 35/02

(54) **Elektromotorisch betriebenes Handküchengerät, insbesondere Stabmixer oder Handrührer**
Electric motor operated hand-held kitchen device, in particular hand blender or hand mixer
Appareil manuel de cuisine à moteur électrique, en particulier mélangeur à main ou batteur à main

(30) Priorität: 22.09.2010 DE 102010041219
(43) Veröffentlichungstag der Anmeldung: 28.03.2012
(73) Patentinhaber: BSH Bosch und Siemens Hausgeräte GmbH, 81739 München (DE)
(72) Erfinder: Fuchs, Ralf, 85579 Neubiberg (DE)

(56) Entgegenhaltungen:
- WO-A2-2010/052631
- DE-B3-102005 025 908
- DE-U1- 9 301 445

## Beschreibung

### Hintergrund der Erfindung

Die vorliegende Erfindung betrifft ein Handküchengerät zum Bearbeiten von Nahrungsmitteln mittels mindestens eines von einem elektromotorischen Antrieb antreibbaren Bearbeitungswerkzeugs, welches in mindestens einer zulässigen Betriebslage verwendbar ist, mit einem Mittel zum Erfassen einer momentanen Funktionslage des Handküchengeräts, wobei das Mittel zum Erfassen ein Lagesignal entsprechend der momentanen Funktionslage bereitstellt, und mit einer Steuerungseinrichtung zum Steuern und/oder Regeln des Antriebs.

### Stand der Technik

Handküchengeräte der eingangs genannten Art weisen üblicherweise rotierende von einem Antrieb angetriebene Werkzeuge, beispielsweise Messer, auf, die zum Bearbeiten von Nahrungsmitteln eingesetzt werden. Ein Stabmixer weist ein glockenformiges, halboffenes Fußteil, in welchem das Bearbeitungswerkzeug teilweise abgedeckt rotieren kann, so dass ein unbeabsichtigtes Berühren vorerst verhindert werden kann. Als weitere Vorsichtsmassnahme kann ein Sicherungsschalter implementiert werden, der das unbeabsichtigte Anlaufen des Antriebsmotors unterbindet. In diesem Fall muss beispielsweise ein Benutzer des Handküchengeräts zwei Schalter betätigen, um eine Inbetriebnahme zu ermöglichen. Diese Sicherungsmaßnahme ist insbesondere bei der Reinigung der Bearbeitungswerkzeuge, die noch mit dem Antrieb verbunden sind, von großem Vorteil.

Eine weitere Möglichkeit ist der Einsatz weiterer Sensoren, die ein unbeabsichtigtes Anlaufen des Antriebs unterbinden. So offenbart die US 3 734 417 eine akkubetriebene Pfeffermühle, die einen Kipp- bzw. Schwenksensor aufweist. Mit Hilfe des Kipp- bzw. Schwenksensors kann somit gewährleistet werden, dass die Pfeffermühle in einer bestimmten Betriebslage eingeschaltet werden kann. Eine ähnliche Technik ist in der US 2006/0198241 A1 offenbart. Auch hier muss die Vorrichtung in eine bestimmte Lage gebracht werden, damit das Bearbeitungswerkzeug in Betrieb genommen werden kann.

Weiter beschreibt die WO 2010/052631 A2 einen Stabmixer, der mit einer Vielzahl unterschiedlicher Sensoren bestückt ist. Um einen sicheren Betrieb des Stabmixers zu gewährleisten lehrt die WO 2010/052631 A2 eine parallele Auswertung der Sensorsignale, um ggf. ein Betrieb des Gerätes zu unterbinden.

In dem deutschen Gebrauchsmuster G 93 01 445.7 ist ebenfalls ein von Hand zu führendes Haushaltsgerät, welches ein sicheres Betrieb gewährleistet. Dazu weist die Vorrichtung gemäß der G 93 01 445.7 einen Neigungsschalter auf, der in einer sicheren Betriebslage den Betrieb des Motors freigibt.

Bei all diesen Vorrichtungen kann jedoch eine unerwünschte Betriebsunterbrechung vorkommen, da auch ein kurzfristiges Verlassen der bevorzugten Betriebslage, welches durch die jeweilige Sensoreinrichtung erfassbar ist, zu einem Ausschalten führen kann. Dieses unerwünschte Ausschalten führt zu einem unterbrochenen bzw. unkontinuierlichen Betrieb, welches von einem Benutzer als störend wahrnehmbar ist und ferner sich in der Qualität der zubereiteten Nahrungsmittel auswirkt.

### Der Erfindung zugrundeliegende Aufgabe

Der Erfindung liegt die Aufgabe zugrunde, ein Handküchengerät bereitzustellen, der einen sicheren kontinuierlichen Betrieb gewährleistet.

### Erfindungsgemäße Lösung

Die Lösung der Aufgabe gelingt durch ein Handküchengerät mit den Merkmalen des Anspruchs 1. Vorteilhafte Aus- und Weiterbildungen, welche einzeln oder in Kombination miteinander eingesetzt werden können, sind Gegenstand der abhängigen Ansprüche.

Das erfindungsgemäße Handküchengerät zum Bearbeiten von Nahrungsmitteln weist mindesten ein Bearbeitungswerkzeug auf, das von einem elektromotorischen Antrieb antreibbar ist. Das Handküchengerät kann in einer Vielzahl unterschiedlicher zulässigen Betriebslagen verwendet werden. Die zulässigen Betriebslagen entsprechen einer bevorzugten Ausrichtung des Handküchengeräts, beispielsweise dergestalt, dass die Achse des Bearbeitungswerkzeugs im Wesentlichen in einer vertikalen Ausrichtung verläuft, jedoch auch andere Ausrichtungen sind vorstellbar. Die zulässige Betriebslage entspricht im Wesentlichen dem Normalbetrieb des Geräts, wie er beispielsweise in einer Gebrauchsanweisung vorgestellt wird. Weiter ist ein Mittel zum Erfassen einer momentanen Funktionslage des Handküchengeräts, wobei das Mittel zum Erfassen ein Lagesignal entsprechend der momentanen Funktionslage bereitstellt, und eine Steuerungseinrichtung zum Steuern und/oder Regeln des Antriebs vorgesehen. Die Steuerungseinrichtung ist dergestalt ausgebildet, um auf Basis des Lagesignals die zulässige Betriebslage zeitgesteuert festzustellen, und um im Falle einer negativen Feststellung eine Betriebsunterbrechung des Handküchengeräts zu bewirken.

Durch das Mittel zum Erfassen der momentanen Funktionslage des Handküchengeräts kann die Steuerungseinrichtung einen sicheren Betrieb gewährleisten. So kann festgestellt werden ob das Gerät, welches bevorzugt von Hand geführt wird, seine definierte Funktionslage verlässt und in Folge dessen kann eine Betriebsunterbrechung durch die Steuerungseinrichtung veranlasst werden. Als Betriebsunterbrechung ist ein Absenken der Motorleistung implementierbar. Folglich kann ein sicherer, verletzungsfreier Betrieb des Handküchengeräts gesichert werden. Das zeitgesteuerte Feststellen ob die momentane Funktionslage einer zulässigen Betriebslage entspricht, ermöglicht einen kontinuierlichen Betrieb, der keine Unterbrechungen aufweist. Dies erhöht die Qualität der Handhabung des Handküchengeräts und ferner des zu bearbeitenden Nahrungsmittels.

Die Erfindung kann mit besonderem Vorteil bei Haushaltsgeräten, insbesondere Handküchengeräte, mit rotierenden Werkzeugen zum Einsatz kommen, beispielsweise bei Stabmixern oder Handrührgeräten. Diese Geräte werden bevorzugt von einem Benutzer bedient und können unterschiedliche Funktionslagen bzw. Betriebslagen aufweisen. Das Haushaltsgerät kann dabei einzelne oder mehrfach angeordnete Werkzeuge aufweisen. Eine erfolgreiche Anwendung ist jedoch grundsätzlich auch bei anderen Haushaltsgeräten, die von einem Benutzer in unterschiedlichen Funktionslagen geführt werden, vorstellbar.

### Bevorzugte Ausgestaltung der Erfindung

Vorteilhafte Aus- oder Weiterbildungen, welche einzeln oder in Kombination miteinander eingesetzt werden können, sind Gegenstand der abhängigen Ansprüche.

Erfindungsgemäß bevorzugt ist die Steuerungseinrichtung dergestalt ausgebildet, um das Lagesignal mittels eines Zeitglieds entsprechend mindestens zwei aufeinender folgenden Zeitpunkten auszuwerten. Somit kann eine zeitgesteuerte Auswertung des Lagesignals bereitgestellt werden, um den kontinuierlichen Betrieb des Handküchengeräts zu gewährleisten bzw. ermöglichen. Das Zeitglied kann gemäß einer möglichen Ausführungsform der Erfindung ein Stellglied aufweisen, welches die Zeitdifferenz bzw. Verzögerungszeit des Zeitglieds zwischen den aufeinanderfolgenden Lagesignalzeitpunkten einstellen kann. Dieses Einstellen kann bereits während der Herstellung des Handküchengeräts durchgeführt werden, jedoch auch einen durch einen Benutzer einstellbaren Wert ist vorstellbar. Bevorzugt weist das Zeitglied einen festen Wert für den Zeitabstand zwischen zwei zeitlich aufeinander folgenden Auswertungen des Lagesignals auf.

Vorteilhafterweise ist das Mittel zum Erfassen der momentanen Funktionslage ein elektronischer Lagesensor. Der elektronische Lagesensor weist eine kompakte Bauweise auf und lässt sich platzsparend in das Gehäuse des Handküchengeräts integrieren. Durch eine vorhandene elektronische Schnittstelle lässt sich einfach das Lagesignal ablesen und entsprechend weiterverarbeiten.

Gemäß der vorliegenden Erfindung ist die Steuerungseinrichtung eingerichtet, um im Falle der Betriebsunterbrechung den Antrieb auf einer minimalen Leistung zu regeln und/oder zu steuern. Somit kann insbesondere eine hohe Betriebssicherheit des Handküchengeräts gewährleistet werden, da beim Feststellen einer falschen bzw. missbräuchlichen Handhabung des Geräts eine Betriebsunterbrechung bewirkt wird. Durch das Regeln des Antriebs auf einer minimalen Leistung kann ein kontinuierlicher Betrieb ermöglicht werden, da beim Erfassen einer zulässigen Betriebslage ein erneutes Anlaufen schnell durchführbar ist.

Es ist bevorzugt, dass die Steuerungseinrichtung eingerichtet ist, um kontinuierlich das Lagesignal auszuwerten, dergestalt, dass bei einem Feststellen mindestens einer zulässigen Betriebslage der Betrieb des Handküchengeräts bewirkbar ist. Somit kann der Normalbetrieb nach einer möglichen Betriebsunterbrechung wieder aufgenommen werden, da die Steuerungseinrichtung durch das kontinuierliche Überwachen des Lagesignals wieder feststellen kann, ob eine zulässige Betriebslage wieder eingenommen worden ist. Daher kann ein unterbrechungsfreier Betrieb des Handküchengeräts gesichert werden, da der Normalbetrieb schnell neu gestartet werden kann.

Zweckmäßigerweise weist das Handküchengerät ein Aktivierungsmittel auf, durch welches das Handküchengerät in einem Bereitschaftsmodus versetzbar ist. Das Aktivierungsmittel kann insbesondere als Sicherheitsschalter ausgebildet und stellt sicher, dass eine unbeabsichtigte Inbetriebnahme des Handküchengeräts unterbunden wird.

Gemäß einer Ausführungsform ist im Bereitschaftsmodus ein Aktivieren des Mittels zum Erfassen der momentanen Funktionslage bewirkt. Folglich kann ein durch das Mittel zu Erfassen der Funktionslage unterstützter Betrieb des Handküchengeräts aufgenommen werden.

Es ist bevorzugt, dass das Bearbeitungswerkzeug rotierend antreibbar ist, und dass die Steuerungseinrichtung eingerichtet ist, um in Abhängigkeit des Lagesignals eine vorherbestimmte Drehzahl des rotierend antreibbaren Bearbeitungswerkzeugs einzustellen. Folglich kann basierend auf die momentane Funktionslage eine vordefinierte Drehzahl des Bearbeitungswerkzeugs eingestellt werden. Falls beispielsweise das Handküchengerät leicht schräg bezüglich der Vertikalen gehalten wird, kann eine entsprechend niedrige Drehzahl durch die Steuerungseinrichtung eingestellt werden. Falls jedoch das Handküchengerät in seine bevorzugte Betriebslage, insbesondere vertikal, gehalten wird, kann eine Maximalleistung bei voller Drehzahl bewirkt werden. In diesem Fall können beispielsweise tief gefrorene Lebensmittel, Eiswürfel oder desgleichen verarbeitet werden.

Erfindungsgemäß bevorzugt ist ein Speicher vorgesehen, der eine Lagesignaltabelle entsprechend zulässiger Betriebslagen aufweist, die mit der Steuerungseinrichtung verbunden ist. Durch die im Speicher abgelegte Lagesignaltabelle können momentan erfasste Funktionslagen mit vordefinierten zulässigen Betriebslagen verglichen werden, um eine entsprechende Steuerung des Handküchengeräts zu gewährleisten.

Das Handküchengerät ist insbesondere als Stabmixer, Handrührer oder desgleichen ausgebildet. Da solche Geräte von Hand geführt werden, kann das Erfassen der momentanen Funktionslage und darauf basierend die Steuerung des Antriebs von großem Vorteil sein.

### Kurzbeschreibung der Figuren

Die Erfindung wird im Folgenden anhand schematischer Zeichnungen an zwei Ausführungsbeispielen mit weiteren Einzelheiten näher erläutert.

Es zeigen:
- Fig. 1:: ein Handküchengerät gemäß der Erfindung in unterschiedlichen Funktionslagen; und
- Fig. 2:: ein vereinfachtes Prinzipschaltbild der Funktionsweise eines Stabmixers gemäß der vorliegenden Erfindung.

### Ausführliche Beschreibung der Erfindung anhand zweier Ausführungsbeispiele

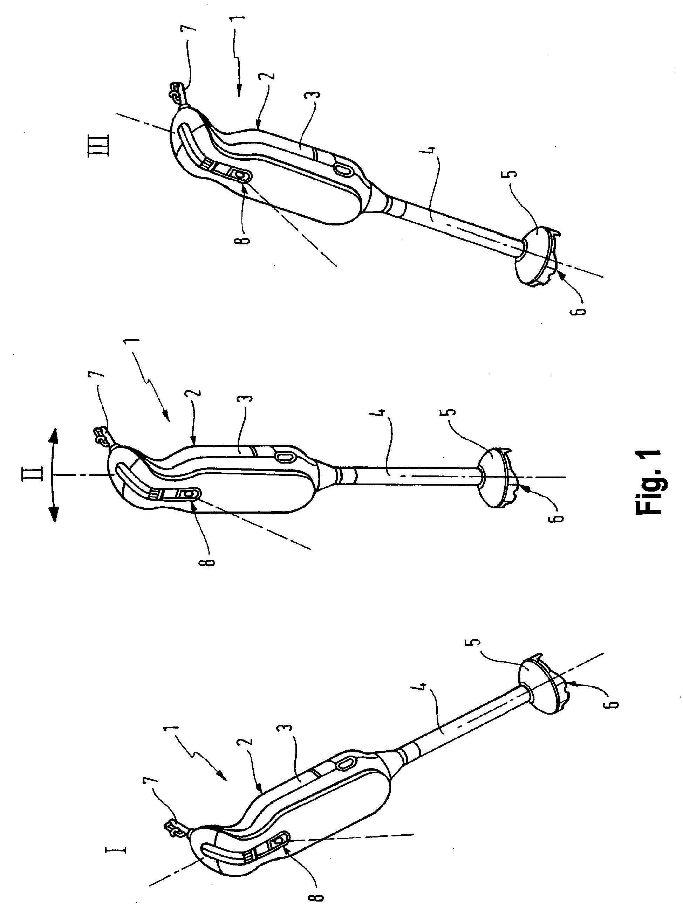

Das in Fig. 1 dargestellte Haushaltsgerät 1 ist als Stabmixer 2 ausgebildet und besteht aus einem Handgriff 3, einem von diesem abragenden Wellenschaft 4 und einem an diesen angeformten Fußteil 5. Handgriff 3, Wellenschaft 4 und Fußteil 5 sind ein- oder mehrstückig als Spritzgießteile aus pflegeleichtem Kunststoff gefertigt, wobei auch eine Metalausfertigung realisierbar ist. Das Fußteil 5 weist die Form einer nach unten offenen Glocke auf und nimmt ein rotierendes Rühr- oder Schneidwerkzeug 6 auf, das drehfest auf das auskragende Ende einer durch den Wellenschaft 4 geführten Welle aufsetzbar ist. Das andere Ende der Welle ist mit einem elektromotorischen Antrieb M verbunden, der im Handgriff 3 angeordnet ist und über ein Netzkabel 7 an ein übliches 230V-Wechselstromnetz angeschlossen werden kann. Alternativ ist auch eine Stromversorgung durch einen im Handgriff 3 angeordneten Akkumulator möglich. Im Handgriff 3 befindet sich ferner eine Sicherheits-Einschaltvorrichtung 8 mit einem ersten Schaltelement 9 und einem zweiten Schaltelement S, die in Reihe in der Stromzuführung zum elektromotorischen Antrieb M angeordnet sind. Das zweite Schaltelement S kann als Sicherheitsschalter bzw. Kindersicherung dienen, der einen Bereitschaftsmodus des Stabmixers 1 bereitstellt. So muss ein Benutzer erst den Sicherheitsschalter S betätigen, bevor der Stabmixer überhaupt durch den Hauptschalter 9 in Betrieb genommen werden kann. Die Schaltelemente 9 bzw. S können über Handhaben der Sicherheits-Einschaltvorrichtung 8, beispielsweise über Druckknöpfe, unabhängig voneinander betätigt werden.

Da das glockenartige Fußteil 5 das beispielsweise messerartige ausgebildete Werkzeug 6 nur von oben und seitlich verdeckt, kann grundsätzlich nicht ausgeschlossen werden, dass der Benutzer des Haushaltsgeräts oder eine in der Nähe befindliche Person das Werkzeug berühren. Sofern sich das Werkzeug 6 nicht in Bewegung befindet, ist dieser Kontakt in Regel unproblematisch. Nach dem Eintauchen des Werkzeugs in das Behandlungsgut stellt dieses ebenfalls keine Gefahrenquelle dar. Ein Kontakt mit einem außerhalb des Behandlungsguts frei unter voller Leistung rotierenden Werkzeug 6 ist jedoch unbedingt zu vermeiden. Ferner kann ein unter voller Leistung drehendes Werkzeug nach dem Herausziehen aus dem Behandlungsgut, insbesondere falls dieses heiß ist, durch Erzeugung von Spritzern auch ohne direkten Kontakt mit dem Werkzeugs sicherheitskritisch sein.

Um das Haushaltsgerät 1 in Betrieb zu nehmen, sind zunächst das als einfacher Ein/Aus-Schalter (On/Off) vorgesehene Schaltelement 9 sowie das als zusätzliche Sicherheitstaste S dienende Schaltelementgleichzeitig zu betätigen.

Um die Bedienfreundlichkeit und Betriebssicherheit zu verbessern, weist der Stabmixer 2 einen elektronischen Lagesensor 10 auf, der innerhalb des Gehäuses des Stabmixers 2 angeordnet ist. Der elektronische Lagesensor 10 kann beispielsweise als eine integrierte Halbleiterschaltung ausgebildet sein und soll insbesondere als Gravitationssensor oder gyroskopischer Sensor ausgebildet sein. Der Lagesensor 10 stellt ein elektronisches Lagesignal 12 bereit, welches einer Funktionslage des Stabmixers 1 entspricht. In der Fig. 1 sind schematisch drei Funktionslagen I, II, III gezeigt, in welchen der Stabmixers 1 betrieben werden kann. In der bevorzugten Lage II verläuft die Achse des Wellenschafts 4 im Wesentlichen vertikal, und so können beispielsweise Nahrungsmittel effektiv verarbeitet werden. In einer zweiten Funktionslage I oder III ist die Achse des Wellenschaftes 4 relativ leicht gekippt, so dass beispielsweise mehr Luft in das zu verarbeitende Mischgut eingearbeitet werden kann. Der Lagesensor 10 erfasst die momentane Funktionslage I, II oder III und stellt das entsprechende Lagesignal 12 für die Steuereinrichtung 11 bereit.

Die Steuereinrichtung 11 steuert folglich den Betrieb der Elektromotors M anhand des Lagesignals 12 des Lagesensors 10. Die Steuereinrichtung 11 weist einen Speicher auf, in welchem beispielsweise eine Lagesignaltabelle gespeichert ist, die eine Vielzahl an zulässigen Funktionslagen aufweist. So kann die Steuereinrichtung das momentane Lagesignal 11 mit denen in der Tabelle gespeicherte Werte vergleichen, um in Folge dessen eine zulässige momentane Funktionslage zu erkennen. Als unzulässige Funktionslage des Stabmixers kann eine horizontale Ausrichtung der Wellenschaftachse sein, aber auch eine zu stark geneigte Achse, welches zu einem Herausschleudern des Mischguts aus dem Bearbeitungsbehälter führen würde.

Um einen kontinuierlichen Betrieb des Stabmixers 1 gewährleisten zu können, weist die Steuereinrichtung 11 ein Zeitglied 13 auf, der eine zeitgesteuerte Auswertung des momentanen Lagesignals 12 des Lagesensors 10 erlaubt. So wird beispielsweise das kurzzeitige Verlassen einer zulässigen Betriebslage bzw. Funktionslage nicht zu einer sofortigen Unterbrechung des Betriebs des Stabmixers führen.

Die Steuereinrichtung 11 kann gemäß einer möglichen Ausführungsform Lagesignale 12 zu einem ersten und zweiten Zeitpunkt mit denen in der Tabelle gespeicherte Werte vergleichen und falls beispielsweise beide Werte unzulässigen Funktionslagen zugeordnet werden können, wird eine Betriebsunterbrechung des Stabmixers 1 bzw. des Motors M bewirkt. Der erste und zweite Zeitpunkt können mittels des Zeitglieds 13 erfasst werden und entsprechen zwei zeitlich aufeinander folgende Werte.

Es ist auch vorstellbar, dass das Zeitglied 13 einen einstellbaren Wert aufweist, der beispielsweise von einem Benutzer einstellbar ist. So kann definiert werden, wie lange der Stabmixer 1 eine Funktionslage verlassen kann, bis die Betriebsunterbrechung bewirkt wird.

Eine Betriebsunterbrechung bedeutet, dass der Motor in einem Bereitschaftsmodus gefahren wird, in welchem nur eine sehr niedrige Leistung vorhanden ist. In diesem Modus kann ein Benutzer durch das rotierende Werkzeug nicht verletzt werden. Auch vorstellbar ist, dass beispielweise eine elektronische Kupplung vorgesehen ist, welche den Antriebsschaft vom Motor M im Falle einer unzulässigen Funktionslage abtrennt, so dass beim Detektieren bzw. Erfassen einer zulässigen Funktionslage I, II oder III der Betrieb wieder schnell aufgenommen werden kann.

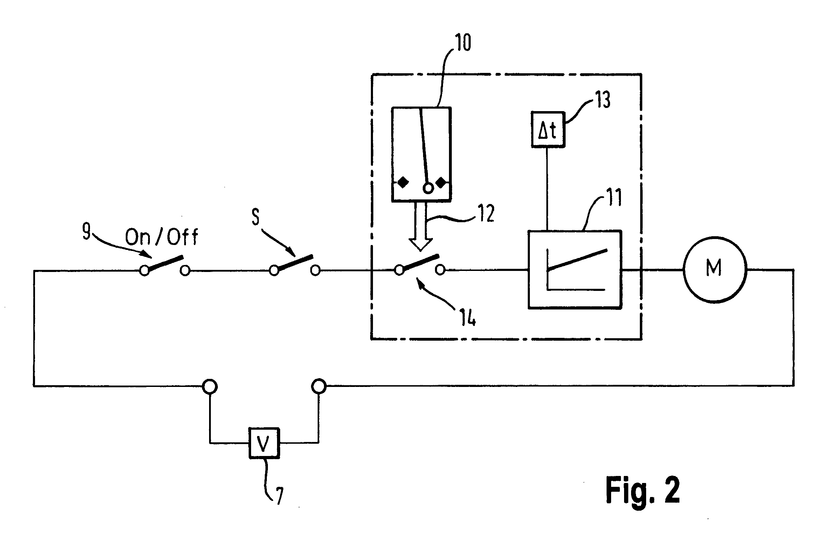

Fig. 2 zeigt ein vereinfachtes Schaltbild, das den Betrieb des erfindungsgemäßen Handküchengeräts 1 verdeutlichen soll. Der Stabmixer 1 kann mit Hilfe des Hauptschalters 9 der Einschaltvorrichtung 8 bedient werden. Damit jedoch überhaupt ein Betrieb ermöglicht werden kann, ist fakultativ ein Sicherheitsschalter S vorgesehen, der die Betriebssicherheit des Stabmixers erhöht. Erfindungsgemäß ist ein Lagesensor 10 implementiert der das Lagesignal 12, beispielsweise auch über einen Signalschalter 14 an die Steuerungseinrichtung 11 weitergeleitet werden kann. Der Signalschalter 14 ist hier außerhalb der Steuerungseinrichtung 11 schematisch dargestellt, jedoch kann dieser Schalter 14 auch innerhalb der Steuerungseinrichtung 11 realisiert werden. Zur Spannungsversorgung der aktiven Bauteile des Stabmixers ist schematisch die Spannungsquelle 7 an zwei Anschlussklemmen dargestellt.

Die Steuerungseinrichtung 11 wertet die Lagesignale 12 des Lagesensors 10 zeitgesteuert mit Hilfe eines Zeitglieds 13 aus. Mittels des Zeitglieds 13 kann die Steuerungseinrichtung 11 zeitlich aufeinanderfolgende Lagesignale 12 auswerten, und dies mit vorherbestimmten bzw. vordefinierten Signalen vergleichen, die in einem Speicher der Steuerungseinrichtung abgelegt sind. Diese vordefinierten Signale entsprechen zulässigen Funktionslagen des Stabmixers, welche einer gefahrenfreien Betriebslage des Stabmixers 1 entsprechen.

### Bezugszeichenliste

- 1: Haushaltsgerät bzw. Handküchengerät
- 2: Stabmixer
- 3: Handgriff
- 4: Wellenschaft
- 5: Fußteil
- 6: rotierendes Werkzeug
- 7: Netzkabel bzw. Spannungsversorgung
- 8: Einschalteinrichtung
- 9: Schaltmittel bzw. Ein/Aus-Schalter
- 10: Lagesensor
- 11: Steuerungseinrichtung
- 12: Lagesignal bzw. Lagesignale
- 13: Zeitglied
- 14: Schalter für das Lagesignal

## Patentansprüche

1. Handküchengerät (1) zum Bearbeiten von Nahrungsmitteln mittels mindestens eines von einem elektromotorischen Antrieb (M) antreibbaren Bearbeitungswerkzeugs (6), welches in mindestens einer zulässigen Betriebslage verwendbar ist, mit:
einem Mittel zum Erfassen (10) einer momentanen Funktionslage des Handküchengeräts (1), wobei das Mittel zum Erfassen (10) ein Lagesignal (12) entsprechend der momentanen Funktionslage bereitstellt, und
einer Steuerungseinrichtung (11) zum Steuern und/oder Regeln des Antriebs (M),
wobei die Steuerungseinrichtung (11) dergestalt ausgebildet ist, um auf Basis des Lagesignals (12) die zulässige Betriebslage zeitgesteuert festzustellen, und um im Falle einer negativen Feststellung eine Betriebsunterbrechung des Handküchengeräts (1) zu bewirken,
**dadurch gekennzeichnet, dass** die Steuerungseinrichtung (11) eingerichtet ist, um im Falle der Betriebsunterbrechung den Antrieb (M) auf einer minimalen Leistung zu regeln und/oder zu steuern.

2. Handküchengerät (1) nach Anspruch 1, **dadurch gekennzeichnet, dass** die Steuerungseinrichtung (11) ausgebildet ist, um das Lagesignal (12) mittels eines Zeitglieds (13) entsprechend mindestens zwei aufeinender folgenden Zeitpunkten auszuwerten.

3. Handküchengerät (1) nach Anspruch 1 oder 2, **dadurch gekennzeichnet, dass** das Mittel zum Erfassen (10) der momentanen Funktionslage ein elektronischer Lagesensor ist.

4. Handküchengerät (1) nach einem der vorhergehenden Ansprüche, **dadurch gekennzeichnet, dass** die Steuerungseinrichtung (11) eingerichtet ist, um kontinuierlich das Lagesignal (12) auszuwerten, dergestalt, dass bei einem Feststellen mindestens einer zulässigen Betriebslage der Betrieb des Handküchengeräts (1) bewirkbar ist.

5. Handküchengerät (1) nach einem der vorhergehenden Ansprüche, **dadurch gekennzeichnet, dass** ein Aktivierungsmittel (S) vorgesehen ist, durch welches das Handküchengerät (1) in ein Bereitschaftsmodus versetzbar ist.

6. Handküchengerät (1) nach Anspruch 5, **dadurch gekennzeichnet, dass** der Bereitschaftsmodus ein Aktivieren des Mittels zum Erfassen (10) der momentanen Funktionslage bewirkt.

7. Handküchengerät (1) nach einem der vorhergehenden Ansprüche, **dadurch gekennzeichnet, dass** das Bearbeitungswerkzeug (6) rotierend antreibbar ist und dass die Steuerungseinrichtung (11) eingerichtet ist, um in Abhängigkeit des Lagesignals (12) eine vorherbestimmte Drehzahl des rotierend antreibbaren Bearbeitungswerkzeugs einzustellen.

8. Handküchengerät (1) nach einem der vorhergehenden Ansprüche, **dadurch gekennzeichnet, dass** ein Speicher vorgesehen ist, der eine Lagesignaltabelle entsprechend zulässiger Betriebslagen aufweist, die mit der Steuerungseinrichtung (11) verbunden ist.

9. Handküchengerät (1) nach einem der vorhergehenden Ansprüche, **dadurch gekennzeichnet, dass** das Handküchengerät (1) als Stabmixer, Handrührer oder desgleichen ausgebildet ist.

## Claims

1. Hand-held kitchen device (1) for processing foodstuffs by means of at least one processing tool (6) which can be driven by an electric-motor drive (M), which is able to be used in at least one permissible operating position, with:
means for detecting (10) a momentary functional position of the hand-held kitchen device (1), wherein the detection means (10) provides a position signal (12) according to the momentary functional position, and
a control device (11) for controlling and/or regulating the drive (M),
wherein the control device (11) is embodied so as to determine, on the basis of the position signal (12), the permitted operating position in a timed manner, and in the event of a negative determination, to cause the operation of the hand-held kitchen device (1) to be interrupted,
**characterised in that** the control device (11) is configured, in the event of operation being interrupted, to regulate and/or control the drive (M) down to a minimum power.

2. Hand-held kitchen device (1) according to claim 1, **characterised in that** the control device (11) is embodied to evaluate the position signal (12) by means of a timer (13) according to at least two consecutive points in time.

3. Hand-held kitchen device (1) according to claim 1 or 2, **characterised in that** the means for detecting (10) the momentary functional position is an electronic position sensor.

4. Hand-held kitchen device (1) according to one of the preceding claims, **characterised in that** the control device (11) is configured to evaluate the position signal (12) continuously, such that, on detection of at least one permissible operating position, the hand-held kitchen device (1) is able to be operated.

5. Hand-held kitchen device (1) according to one of the preceding claims, **characterised in that** an activation means (S) is provided, through which the hand-held kitchen device (1) is able to be put into a standby mode.

6. Hand-held kitchen device (1) according to claim 5, **characterised in that** the standby mode causes the means for detecting (10) the momentary functional position to be activated.

7. Hand-held kitchen device (1) according to one of the preceding claims, **characterised in that** the processing tool (6) is able to be driven rotationally and that the control device (11) is configured to set a previously-determined speed of the rotationally driveable processing tool as a function of the position signal (12).

8. Hand-held kitchen device (1) according to one of the preceding claims, **characterised in that** a memory, which is linked to the control device (11) is provided, having a position signal table of correspondingly permissible operating positions.

9. Hand-held kitchen device (1) according to one of the preceding claims, **characterised in that** the hand-held kitchen device (1) is embodied as a hand blender, hand mixer or the like.

## Revendications

1. Appareil de cuisine manuel (1) pour la préparation de denrées alimentaires au moyen d'au moins un outil (6) actionnable par un actionnement électromoteur (M), lequel outil est utilisable dans au moins une position de fonctionnement autorisée, avec : un moyen de détection (10) d'une position de fonctionnement momentanée de l'appareil de cuisine manuel (1), le moyen de détection (10) fournissant un signal de position (12) selon la position de fonctionnement momentanée, et un dispositif de commande (11) pour la commande et / ou la régulation de l'actionnement (M), dans lequel le dispositif de commande (11) est exécuté de sorte à détecter de manière temporisée la position de fonctionnement autorisée sur base du signal de position (12) et à provoquer une interruption du fonctionnement de l'appareil de cuisine manuel (1) en cas de détection négative, **caractérisé en ce que** le dispositif de commande (11) est équipé afin de régler et / ou d'actionner l'actionnement (M) sur / selon une puissance minimale en cas d'interruption du fonctionnement.

2. Appareil de cuisine manuel (1) selon la revendication 1, **caractérisé en ce que** le dispositif de commande (11) est exécuté afin d'évaluer le signal de position (12) au moyen d'un temporisateur (13) selon au moins deux instants consécutifs.

3. Appareil de cuisine manuel (1) selon la revendication 1 ou 2, **caractérisé en ce que** le moyen de détection (10) de la position de fonctionnement momentanée est un capteur de position électronique.

4. Appareil de cuisine manuel (1) selon l'une des revendications précédentes, **caractérisé en ce que** le dispositif de commande (11) est équipé afin d'évaluer le signal de position (12) en continu de telle manière que l'actionnement de l'appareil de cuisine manuel (1) peut être provoqué suite à la détection d'au moins une position de fonctionnement autorisé.

5. Appareil de cuisine manuel (1) selon l'une des revendications précédentes, **caractérisé en ce qu'**un moyen d'activation (S), permettant de placer l'appareil de cuisine manuel (1) en mode veille, est prévu.

6. Appareil de cuisine manuel (1) selon la revendication 5, **caractérisé en ce que** le mode veille induit une activation du moyen de détection (10) de la position de fonctionnement momentanée.

7. Appareil de cuisine manuel (1) selon l'une des revendications précédentes, **caractérisé en ce que** l'outil (6) est actionnable de manière rotative et **en ce que** le dispositif de commande (11) est équipé afin de régler une vitesse de rotation de l'outil actionnable de manière rotative déterminée au préalable en fonction du signal de position (12).

8. Appareil de cuisine manuel (1) selon l'une des revendications précédentes, **caractérisé en ce qu'**une mémoire est prévue, lequel présente un tableau des signaux de position selon les positions de fonctionnement autorisées relié au dispositif de commande (11).

9. Appareil de cuisine manuel (1) selon l'une des revendications précédentes, **caractérisé en ce que** l'appareil de cuisine manuel (1) est exécuté sous forme de mixeur plongeant, batteur ou élément semblable.
